Europäisches Patentamt

European Patent Office

Office européen des brevets

(19)

(11) **EP 0 862 073 B1**

(12) **EUROPEAN PATENT SPECIFICATION**

(45) Date of publication and mention
of the grant of the patent:
**04.09.2002  Bulletin 2002/36**

(51) Int Cl.[7]: **G02B 6/42**, G02B 6/26

(21) Application number: **98400446.5**

(22) Date of filing: **25.02.1998**

(54) **Ferrule with a tapered optical fibre**

Hülse mit einer sich verjüngenden optischen Faser

Embout avec une fibre optique taillée en cône

(84) Designated Contracting States:
**DE FR GB IT**

(30) Priority: **26.02.1997  JP 4242397**

(43) Date of publication of application:
**02.09.1998  Bulletin 1998/36**

(73) Proprietor: **SUMITOMO WIRING SYSTEMS, LTD.**
**Yokkaichi City Mie 510 (JP)**

(72) Inventor: **Yuuki, Hayato,**
**c/o Sumitomo Wiring Systems, Ltd.**
**Yokkaichi-City, Mie 510 (JP)**

(74) Representative: **Bertrand, Didier et al**
**Cabinet FEDIT-LORIOT**
**38, Avenue Hoche**
**75008 Paris (FR)**

(56) References cited:
**EP-A- 0 366 320**          **EP-A- 0 664 466**
**DE-A- 3 544 136**          **US-A- 4 368 481**
**US-A- 5 438 873**

• **"Plastic fiber promises low-cost networks",**
**Laser Focus World, 31(1995), October, No. 10,**
**pp. 36-39**

**Description**

The present invention relates to a light communication system. In particularly, the present invention concerns an optical transmission between an optical fiber and a light receptor and, more particularly an optical transmission device used therefor.

There are two main types of optical fibers, glass optical fibers and plastic optical fibers.

The glass optical fibers have a high transparency. Therefore, when the precision of the light transmission has to be improved, the diameter of their core part is designed to be as small as possible, thereby easily enhancing their aptitude to a single mode signal.

On the other hand, in the case of the plastic optical fibers, a better resistance to bending and countermeasures to an optical interference or attenuation in the fiber can be envisaged. Their diameter is therefore usually designed to be greater compared to that of glass optical fibers. Due to this large diameter, plastic optical fibers tend to suffer from a certain level of the mode dispersion, thereby causing light transmission loss and wave deformation. Nonetheless, by virtue of their large opening , when connecting optical fibers therebetween or to other element, positioning of these elements does not require an excessive precision. The plastic fibers are therefore easy to be aligned optically and supply a less costly and useful optical communications device. Consequently, because of its large diameter, a known plastic fiber can receive a number of optical signals emitted by a light emitting diode (LED) into this optical fiber. These optical signals may then exit and be received by a large chip-size photodiode (PD) which transforms them into electrical signals.

In recent optical fiber-communications, there is research into high speed optical communications having a speed of from several hundreds of Mbps (megabits per second) to an order of several Gbs (Gigabits per second). Accordingly, the receptor-side photodiode has a limited chip size : the surface is irradiated by a light to generate excited electrons. These electrons move to a position located at a chip terminal, where wires are bonded. The greater the chip surface of the photodiode is, the longer the time of this movement is. The chip surface of the photodiode should therefore be designed to be as small as possible.

EP 0 664 466 A2 discloses a ferrule including a sheath holding portion and a core wire holding portion, which have inner diameters slightly greater than the outer diameters of a sheath and a core wire. In this disclosure, the sheath holding portion is provided with a flange portion which contacts a coiled spring when mounted in a connector housing, and the core wire holding portion includes a large diameter portion at its front end for receiving a front end portion of the core wire. The large diameter portion has a tapered inner surface such that its inner diameter increases toward the front end, and the angle of flare is 30 degrees.

Further, US 4,368,481 discloses a light-driven semiconductor device that comprises an optical fibre having an output end located in the vicinity of a light sensitive area of a light trigger thyristor. In this device, a silicone rubber is interposed between the output end and the light sensitive area, and pressed against the light sensitive area by the output end. The output end is thus located close to the light sensitive area, and a light signal emitted from the output end is led to the light sensitive area.

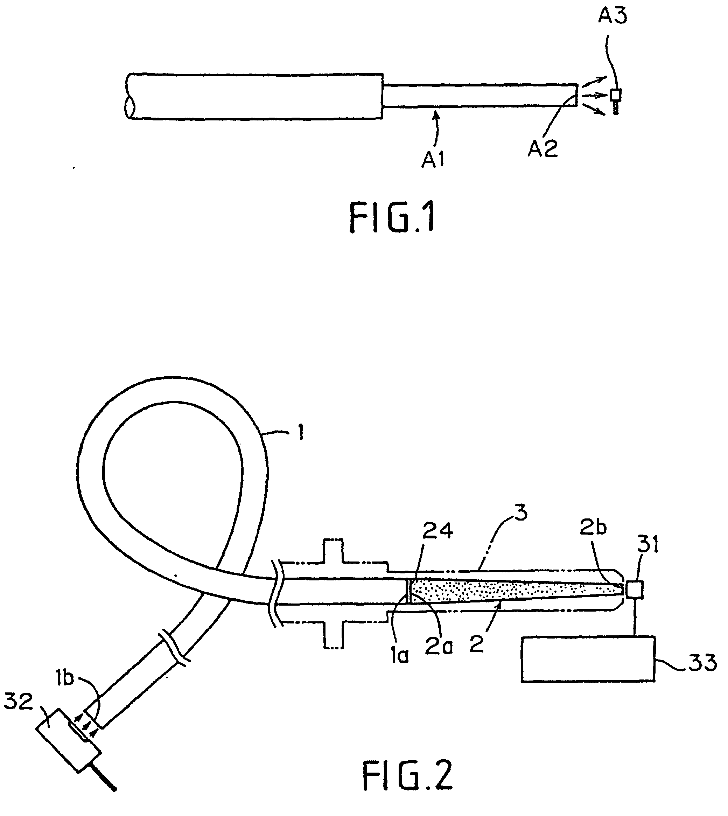

However, in the case of a photodiode having a small surface chip, the known plastic optical fibers have been designed to have a large opening diameter, as above-mentioned. Then, as shown in Fig. 1, only part of the signal coming out of the light-exit end face A2 of the optical fiber A1 is received by the photodiode A3. The optical loss is thus increased between the light-exit end face A2 and the photodiode A3.

When the plastic optical fiber has for example an end external diameter of 750μm, a uniform light can be emitted therefrom and received by a photodiode having a light-reception face of 250μm of diameter. If calculated on the basis of the surface ratio, only 11% of the original light volume is received. This means that, when transformed into decibel milliwatt (dBm), the light volume is decreased by 9.54 dBm.

Accordingly, a large opening diameter plastic fiber A1, though easily handled, is poorly adapted to a photodiode $A_3$ having a small chip surface designed for receiving a high speed signal. This incurs a heavy loss due to bonding.

A purpose of the present invention is to provide an optical-transmission device which, when used with an optical receptor having a small surface chip, enables to reduce optical loss due to bonding.

To solve the above-mentioned problem, there is provided an optical transmission device comprising:

a) an optical fibre cable including a core, a clad and a coating, and having a light-exit face;
b) a cable-adapting means including a core portion having a frusto-conical shape with a large end face and a small end face, a clad portion, and a coating having a lower refractive index than that of the clad portion; and
c) a ferrule including an optical fibre cable housing having a void diameter corresponding to the diameter of the optical fibre cable and a cable-adapting means housing having a void frusto-conical shape corresponding to the shape of the cable-adapting means;

wherein at least part of the optical fibre cable is contained in the optical fibre cable housing, wherein the cable-adapting means is contained in the cable-adapting means housing.

Preferably, the light-exit face of the optical fibre cable is bonded to the large end face of the cable-adapting means with a transparent binding material.

Accordingly, light entering one end portion of the optical-fiber cable is led through by reflecting on the taper surface. Therefore, when a small surface chip is used as an outside optical element, both units are bonded, such that the light is efficiently guided therebetween. The optical loss is thus greatly reduced. Further, the optical-fiber cable and the cable-adapting means are properly positioned and fixed in the ferrule. These units can be positioned without using another element. The number of pieces used is thus reduced.

Advantageously, the ferrule may comprise an inside surface corresponding to the tapered cylindrical surface of the cable-adapting means, thereby securely holding the cable-adapting means. Therefore the cable-adapting means can be positioned more securely and easily in the ferrule.

Moreover, the cable-adapting means may comprise an optical fiber material having a same level of numerical apertures as that of the optical-fiber cable. The numerical apertures of the optical fiber cable can therefore be matched with those of the cable-adapting means. The light leaving the optical-fiber cable can be efficiently led through the cable-adapting means.

Advantageously, the optical-fiber cable and the cable-adapting means respectively comprise a core portion having a same level of refractive index to the other and are bonded to each other through a transparent binding material having a same level of refractive index as that of the core portion. Fresnel reflection is thus efficiently suppressed at the bonding interface. The optical transmission is thus improved.

The optical-fiber cable and the cable-adapting means may be integrally formed. Fresnel reflection is thus prevented and the optical transmission is improved.

Advantageously, the cable-adapting means comprise a clad portion having a same level of refractive index to that of the core portion.

The clad portion may be covered with a coating having a refractive index lower than that of the clad portion. By virtue of this structure, the light led to the tapered surface of the cable-adapting means and going therethrough for leaking is reflected back towards the interior of the cable-adapting means by the coating. The optical loss in the cable-adapting means is thus greatly reduced.

The optical-fiber cable may be comprised of a plastic optical-fiber cable.

The optical-fiber cable may be comprised of a step-index type optical-fiber cable.

The optical-fiber cable may be comprised of a graded-index type optical-fiber cable.

The present invention and its advantages should be more apparent from the following description of preferred embodiments and the accompanying drawings, given strictly as non-limiting examples, in which :

- Fig. 1 shows the functioning of a prior art optical-transmission device ;
- Fig. 2 shows a schematic structure of the optical-transmission device according to the first embodiment of the present invention;
- Fig. 3 shows a cross-sectional view of the bonding portion between the optical-fiber cable and the cable-adapting means of the optical-transmission device, according to the first embodiment ;
- Fig. 4 schematically shows the shape of the cable-adapting means ;
- Fig. 5 shows a perspective view of the procedure when the cable-adapting means are manufactured ;
- Fig. 6 shows the principle of the light advancement inside the cable-adapting means ;
- Fig. 7 shows a cross-sectional view of the light exiting portion of the optical-transmission device according to the first embodiment ;
- Fig. 8 shows a cross-sectional view of the light exiting portion of a device according to a second embodiment; and
- Fig. 9 is a cross-sectional view of the optical-fiber cable and the cable-adapting means of a device according to a fifth embodiment.

Fig. 2 shows a optical-transmission device according to a first embodiment of the invention. As shown in Fig. 2, cable-adapting means 2 having a substantially frusto-conical shape, is bound to the light-exit end-face 1a of a widely used plastic optical cable 1, thereby the light out put end diameter of the optical-fiber cable 1. The cable-adapting means 2 are housed into a ferrule 3 in this state.

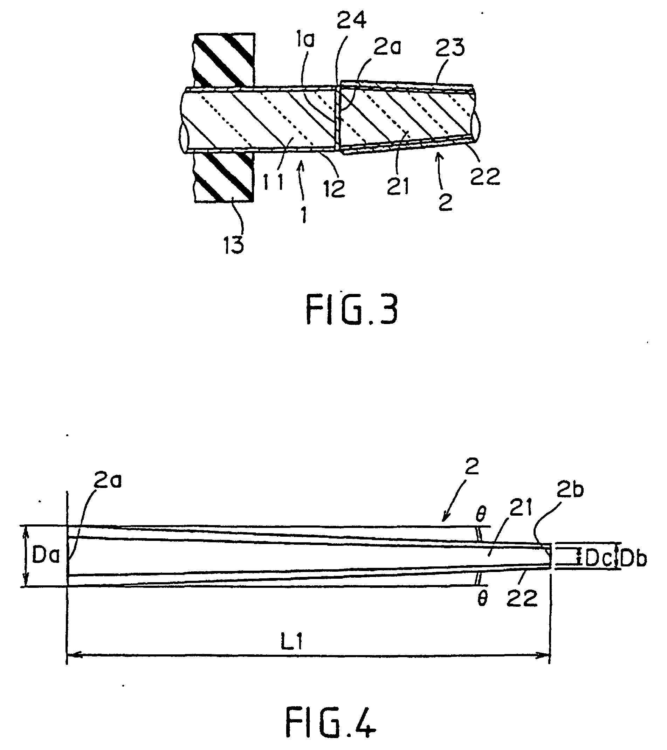

The optical-fiber cable 1 used has a relatively small difference of refractive index between its core part and its clad part. The optical-fiber cable 1 has a low level of numerical aperture (NA) and belongs to a step-index type fiber. As shown in Fig. 3, the optical-fiber cable 1 has a core 11 made of a plastic material having a refractive index of 1.495, such as PMMA (polymethylmethacrylate) or other similar material. The optical-fiber cable 1 further comprises a clad 12 coating the core 11 and being made of a fluorocarbon polymer having a refractive index of 1.493, such as PTFE (polytetrafluoroethylene) or other similar material. The external cylindrical surface of the clad 12 is also covered with a coating 13 made of a plastic material such as polyethylene or other plastic. The optical fiber cable 1 is stripped of the coating 13 from its end portion along a predetermined length thereby exposing the light-exit end-face 1a. The optical-fiber cable 1 has a clad external diameter of 750μm and gives a transmission loss of 230 dB/km. The difference of refractive index between the core and the clad is equal to 0.002.

As shown in Fig. 4, the cable-adapting means 2 having a frusto-conical shape, comprises a core 21 and a clad 22. The tapered surface thereof is further covered by a low refractive index film or coating 23 (shown in Fig. 3).

The cable-adapting means 2 are formed extending the same plastic optical fiber as that for the optical-fiber cable 1 or a plastic fiber having the same numerical aperture. For instance, the cable-adapting means 2 may have a length L1 of 6 mm. The frusto-conical shape consisting of a core 21 and a clad 22 may have : a large face 2a having a large diameter Da which measures 750 μm corresponding to the outer diameter of the optical fiber cable 1 ; and a small face 2b having a diameter 2b ranging from 200μm to 700μm. The above core 21 and the clad 22 have to have the same layer-thickness ratio as the core 11 and the clad 12 of the optical fiber cable 1. The same thickness ratio must be kept at the small face 2b, i.e.

$$D_c = \alpha\, Db$$

wherein Dc signifies the diameter of the core 21 at the small face 2b and $\alpha$ signifies the layer thickness ratio (i.e. core diameter / clad diameter).

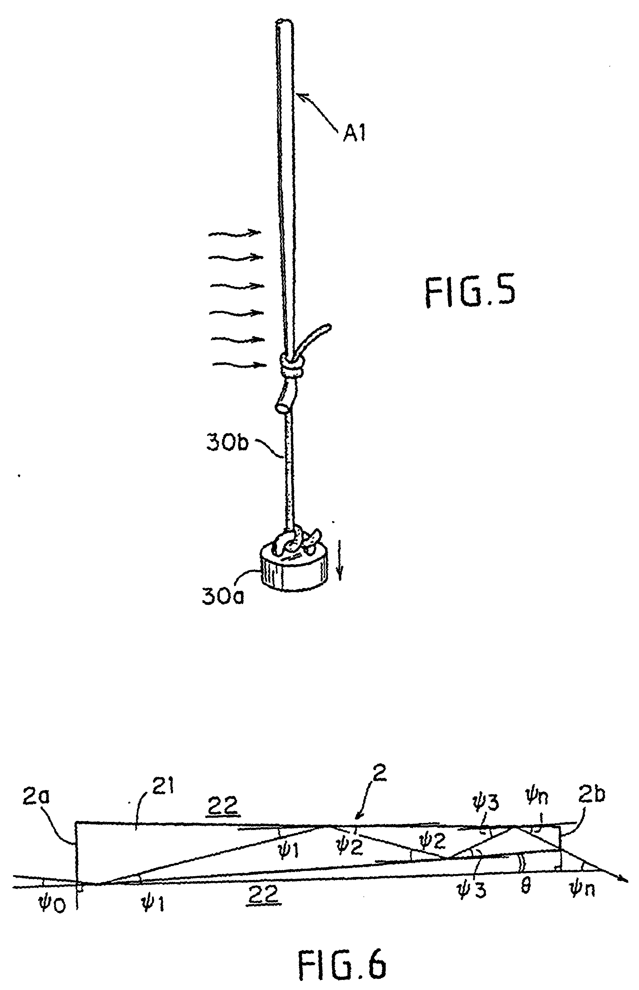

The above-mentioned frusto-conical shape (21, 22) is formed by stacking the core 21 and the clad 22 as in the optical fiber cable 1 and applying a force of around 100g at the end portion thereof, in an axial direction while heating, thereby elongating the frusto-conical shape. Fig. 5 illustrates this method. A poise 30a of 100g is tied to the end portion of a known optical plastic fiber through a thread 30b. A portion adjacent to the end portion is heated by 150°C hot air along a span of 10 mm. By varying the heating time from 5 to 10 seconds, the optical fiber A1 is expanded by virtue of the poise 30a, to obtain a cable-adapting means 2 having a frusto-conical shape, as shown in Fig. 4.

When the optical wave path is formed in frusto-conical shape the advancing light is reflected at the interface of the core 21 and the clad 22, as shown in Fig. 6. At every reflection, the angles $\phi_1$, $\phi_2$, $\phi_3$, $\phi_n$ of the advancing light, with respect to the optical axis, become greater. When q is defined as the inclination of the tapered surface relative to the optical axis and $\phi_0$ as an angle of incidence of the light towards the core 21, the successive angles $\phi_1$, $\phi_2$, $\phi_3$, ... $\phi_n$ of the advancing light vis-à-vis the optical axis can be formulated as follows :

$$\phi_1 = \phi_0 + 2\theta$$

$$\phi_2 = \phi_1 + 2\theta$$

$$\phi_3 = \phi_2 + 2\theta$$

$$.$$

$$.$$

$$\phi_{(n-1)} = \phi_{(n-2)} + 2\theta$$

$$\phi_n = \phi_{(n-1)} + 2\theta$$

Subsequently, the angle $\phi_n$ after n-times reflections at the interface of the core 21 and the clad 22 can be defined as follows:

$$\phi_n = \phi_0 + 2\theta \times n$$

This equation indicates that the reflection angle of the light at the interface of the core 21 and the clad 22 increases with the number of reflections.

Accordingly, by repeating the reflections, the advancing light inside the fiber tends to go through the interface, which leads to increased light leak. To prevent such a light leak, the tapered surface of the cable-adapting means 2 are painted with a low refractive index film 23, made of PMMA (polymethyl-methacrylate) or other similar material, which has a refractive index lower than that of the clad 22. By virtue of this structure, the light passing through the interface of the core 21 and the clad 22 is then fed back into the core 21. In this construction, the small-diameter face 2b contains a numerical aperture (NA) of 0.5.

The cable-adapting means 2 are adhered to the light-exit end-face 1a of the optical-fiber cable 1 through a transparent soft silicone elastomer 24. This elastomer 24 is manufactured by : extending a base material consisting of a high refractive index silicone ; forming a sheet hardened at room temperature and carefully punching out the product from this sheet. Such a silicone elastomer 24 is designed to have a refractive index of 1.495, the figure being same as that of the cores 11, 21 of respective the optical-fiber cable 1 and the cable-adapting means 2. In this manner, the Fresnel reflection at the interface between the core 11, 21 and the soft silicone elastomer 24, the Fresnel reflection is prevented.

To only stick the optical-fiber cable 1 to the cable-adapting means 2, a matching oil could be used instead of the silicone elastomer 24. However, the viscosity of the oil tends to vary with temperature and generates air bubbles when pouring. This may easily effect the stability of the communication path. Accordingly, a manufacture from a silicone-based, high refraction material is preferably used.

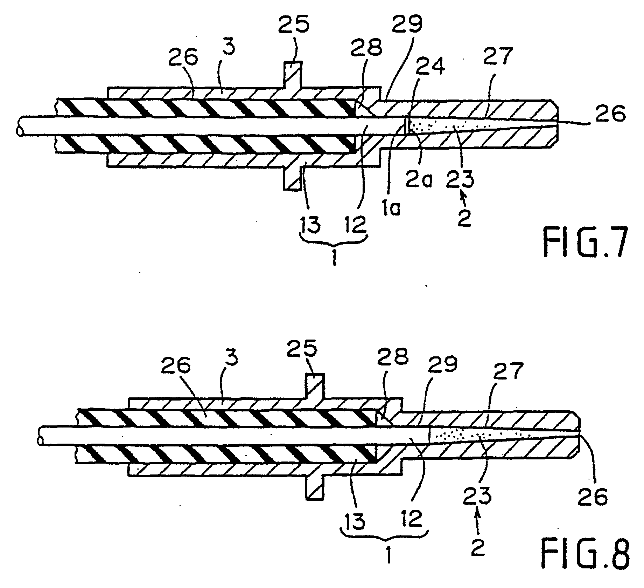

The ferrule 3 may be manufactured by cutting a brass material in a shape as shown in Fig. 7. The ferrule 3 is provided with a flange 25 projecting outwards in a radial direction, half-way along the axial direction. The flange 25 abuts to a connector not shown in the figures. The ferrule 3 also comprises a cable path-hole 29 consisting of : a fiber housing 26 having a void diameter corresponding to the diameter of the coating 13 of the cable 1, a cable-adapting means housing 27 for holding the cable-adapting means 2 and having an exposed end portion and a slant housing 28 relaying these two housing. These three housings are sequentially formed in the same axial direction. Moreover, the cable-adapting means housing 27 has a void frusto-conical shape corresponding to the shape of the cable-adapting means 2.

The functions of the above-mentioned device will be explained hereinafter. As shown in Fig. 2, the light-exit end-face 1a of the optical-fiber cable 1 is stuck to the cable-adapting means 2 via the soft silicone elastomer sheet 24. The resulting assembly is inserted through the cable path hole 29 of the ferrule 3. A photodiode (PD) 31 is then placed face to face near the end portion of the element 2. The photodiode 31 used comprises a small surface chip for high speed communication. At the other end portion of the optical-fiber cable 1, a light emitting diode (LED) 32, as a light source, is placed face to face near the light-receiving face 1b.

The light emitting diode 32 is turned on and off to emit a predetermined optical signal on the light-receiving end face 1b. The light moves through the cable 1 by repeating reflection at the interface of the core 11 and the clad 12 and exits through the light-exit end-face 1a. The light passes through the soft silicone elastomer 24 which has same level of refractive index as that of the cable and then goes through the large-diameter face 2a of the cable-adapting means 2 into the core 21. As the soft silicone elastomer 24 has the same level of refractive index as that of both the core 11, 21, the optical loss due to Fresnel reflection can be prevented very efficiently.

The light penetrated into the core 21 of the cable-adapting means 2, moves ahead by repeating successive reflections at the interface of the core 21 and the clad 22. During this, as mentioned above, the angle of reflection of the light at the interface of the core 21 and the clad 22 increases according to the number of reflections. However, as the clad is further painted with a low refractive index film, light leak out is efficiently prevented.

Then, the light passes through the small diameter face 2a and hits the receiving surface of the photodiode 31 which transforms the light into an electrical signal. The signal is treated by a processing circuit 33. As mentioned above, the photodiode 31 comprises a small surface chip to obtain a high speed functioning. When the small diameter face 2b of the element 2 is designed to have a dimension corresponding to the chip surface of the photodiode 31, most of the light leaving the small diameter face 2b can be recovered by the light-receiving face of the photodiode 31. The optical loss incurred at this stage can be greatly reduced.

Table 1 shows variations of the light-reception sensitivity of a photodiode, when the external diameter of the small face 2b of the means 2 is varied. However, the photodiode used for these experiments has a large surface chip. Consequently, in the case of the maximal external diameter of 750μm, the exit-light from the element 2 is considered to be entirely recovered by the photodiode. In these experiments, the optical-fiber cable 1 has a length of 2m. Likewise, the light-emitting diode 32 used has a median wavelength of 700 nm and an out-put power of 3 dBm. The cable-adapting means 2 have a length L1 of 6mm, whilst the frusto-conical shape consisting of core 21 and clad 22 comprises a large face 2a having a diameter Da of 750 μm, corresponding to the external diameter of the optical-fiber cable 1. Clad 12 has an external diameter of 750μm. As such, when the small-diameter face 2b has an outer diameter of 750μm, tapering is totally removed.

Table 1

| Small face of the cable-adapting means (external diameter) | Light reception sensitivity |
| --- | --- |
| 250 μm | -15.519dBm |
| 300 | -14.974 |

Table 1 (continued)

| Small face of the cable-adapting means (external diameter) | Light reception sensitivity |
| --- | --- |
| 350 | -14.477 |
| 400 | -14.821 |
| 450 | -14.309 |
| 500 | -13.719 |
| 550 | -13.104 |
| 600 | -12.413 |
| 650 | -12.252 |
| 700 | -11.722 |
| 750 (without tapered surface) | -11.116 |

In the above-mentioned experiments the photodiode used has a large surface chip. In practice, when a photodiode 31 for high speed processing (small surface chip) has a receiving-surface diameter of, for instance, 250μm, a final light-reception sensitivity must be calculated by taking into account this difference in surface. When light signals uniformly leaving the end surface of a plastic-optical fiber (external diameter = 750μm) are captured by a photodiode having a diameter of 250μm, only 11% of the original signals are received on the basis of the surface ratio. This can be transformed into dBm as follows :

$$-10 \times Log\ (0.11) = 9.54\ (dB)\ ;$$

indicating that the optical volume is lowered by 9.54 dBm.

In Table 1, when the small diameter face of 750μm is compared with 250μm, the light-reception sensitivity is lowered by some 4.4dBm only.

Consequently, by adding the cable-adapting means 2 to the optical-fiber cable 1, like in this embodiment, light-reception sensitivity is lowered by about 4.4 dBm (-15.519). This is to be compared to the decrease of 9.54 dBm obtained in the past, calculated on the basis of the surface ratio, with respect to the original light intensity (-11.116). Thus, compared with the prior art example, a gain of

$$9.54\text{-}4.4 = 5.14\ dBm$$

can be obtained.

Consequently, even if the incidence plane of an optical receptor such as photodiode 31 becomes very small, optical signals inside the cable-adapting means 2 become intensified as they approach the small diameter face 2b. A decrease of optical loss thus enables an efficient light connection. Accordingly, to efficiently bind a photodiode 31 designed for receiving a high speed light signal over the order of several hundred Mbps in particular, a step-index type optical-fiber cable 1, developed for highspeed light communications, may be used as transmission medium. By adding a frusto-conical cable-adapting means 2 to its edge, the two parts are efficiently bound and the subsequent optical loss can be minimized.

Further, when fixing the cable-adapting means 2 to the light-exit end-face 1a of the optical-fiber cable 1, a soft silicone elastomer 24 can be used for binding them. Handling thus becomes easy.

According to the second embodiment (Fig. 8) the same cable-adapting means 2 as in the first embodiment are placed at the light-exit end-face 1a of a known step-index type plastic optical fiber 1. These are housed into the ferrule 3 and positioned properly. Compared to the first embodiment, the soft silicone elastomer 24 is not used. Except for that point, all the other structural features are the same as those of the first embodiment.

The light-reception sensitivities, measured for the above device are represented in table 2. The experimental conditions were the same as for the first embodiment , the results of which are given in Table 1.

Table 2

| Small face of the cable-adapting means (external diameter) | Light reception sensitivity |
| --- | --- |
| 250 μm | -16.003dBm |
| 300 | -15.571 |

Table 2   (continued)

| Small face of the cable-adapting means (external diameter) | Light reception sensitivity |
|---|---|
| 350 | -15.379 |
| 400 | -15.460 |
| 450 | -15.100 |
| 500 | -14.219 |
| 550 | -14.004 |
| 600 | -13.213 |
| 650 | -13.112 |
| 700 | -12.522 |
| 750 (without tapered surface) | -11.116 |

As shown in table 2, when the light leaving the small diameter face 2b of the cable-adapting means 2 is captured by a photodiode having, for instance, a 250μm diameter, the light-reception sensitivity amounts to -16,003 dBm. This means that the sensitivity is lowered only by 4.887 dBm compared to that obtained when using a device without taper. Compared to the decrease of 9.54 dBm in the prior art, the loss is greatly reduced. Compared to the first embodiment, optical loss due to bonding is increased by a degree corresponding to the absence of the soft silicone elastomer 24. However, when a photodiode 31 is used with a small surface chip for high speed transmission, this sensitivity is greatly improved, compared to the figure in the prior art.

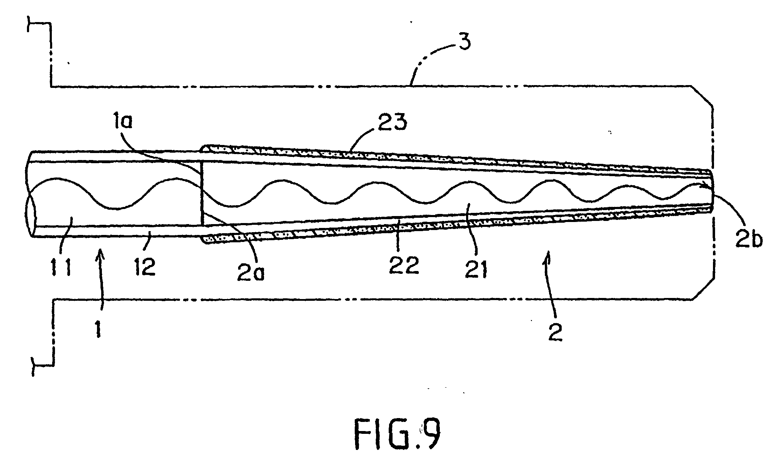

Fig. 9 shows a device according to a third embodiment of the present invention. The reference numbers are the same as previously used. According to this device, the graded-index type core is used for the plastic optical-fiber cable and the cable-adapting means 2. The optical-fiber cable 1 and the cable-adapting means 2 are prepared as separate pieces, and arranged in a proper position inside the ferrule 3. Further, the cable-adapting means 2 are prepared as shown in Fig. 5, by directly drawing the end portion of a known graded-index type optical-fiber and cut out in a predetermined dimension. The cable-adapting means 2 are made of a same material as that of the optical fiber cable 1 or of a material having the same level of numerical apertures as that of the optical fiber cable 1.

The light-reception sensitivities measured with the device according to the third embodiment, are represented in table 3. The experimental conditions are as previously described.

Table 3

| Small face of the cable-adapting means (external diameter) | Light reception sensitivity |
|---|---|
| 150 μm | -18.211dBm |
| 200 | -15.239 |
| 250 | ***** |
| 300 | -14.387 |
| 350 | -14.502 |
| 400 | -14.669 |
| 450 | -13.510 |
| 500 | -13.732 |
| 550 | -13.526 |
| 600 | -13.637 |
| 650 | -12.991 |
| 700 | -13.007 |
| 750 (without tapered surface) | - 12.086 |

The optical loss in the prior art can be estimated theoretically to be 7.96 dBm. However, when the small face 2b having an external diameter of 300 μm (-14.387 dBm) is compared with that of 750μm (-12.086 dBm), the former has an intensity lower than the latter by 2.301 dBm (14.387 - 12.086). When calculated by surface ratio, the decrease must be 7.96 dBm with regards to the original intensity. Compared to that, the actual decrease is confined to 2.30 dBm. This embodiment incurs an optical loss due to bonding during the course of the transmission. However, it attains a gain of 5.66 dBm (7.96 - 2.30), compared to the prior art.

Each of the previous embodiments uses mainly a plastic optical fiber having a relatively large core diameter. As such, an object of these embodiments is to converge the beams leaving the plastic optical fiber. This method can also be applied in the same manner to a glass optical fiber having a relatively large core.

**EP 0 862 073 B1**

**Claims**

1. An optical transmission device comprising:

   a) an optical fibre cable (1) including a core (11), a clad (12) and a coating (13), and having a light-exit face (1a);
   b) a cable-adapting means (2) including a core portion (21) having a frusto-conical shape with a large end face (2a) and a small end face (2b), a clad portion (22), and a coating (23) having a lower refractive index than that of the clad portion (21); and
   c) a ferrule (3) including an optical fibre cable housing (26) having a void diameter corresponding to the diameter of the optical fibre cable (1) and a cable-adapting means housing (27) having a void frusto-conical shape corresponding to the shape of the cable-adapting means (2);

   wherein at least part of the optical fibre cable (1) is contained in the optical fibre cable housing (26), wherein the cable-adapting means (2) is contained in the cable-adapting means housing (27).

2. An optical transmission device according to claim 1, wherein the light-exit face (1a) of the optical fibre cable is bonded to the large end face (2a) of the cable-adapting means (2) with a transparent binding material (24).

3. An optical transmission device according to claim 1 or 2, wherein said cable-adapting means (2) comprises an optical fibre material having the same level of numerical apertures as that of said optical-fiber cable (1).

4. An optical transmission device according to any one of claims 1 to 3, wherein said optical-fibre cable (1) comprises a core (11) having the same level of refractive index as that of said core portion (21) of said cable-adapting means (2), and bonded thereto via a transparent binding material (24) having the same level of refractive index as that of said core portion (21).

5. An optical transmission device according to any one of claims 1 to 4, wherein said optical-fibre cable (1) is comprised of a plastic optical-fibre cable.

6. An optical transmission device according to any one of claims 1 to 4, wherein said optical-fiber cable (1) is comprised of a step-index type optical-fibre cable.

7. An optical transmission device according to any one of claims 1 to 4, wherein said optical-fiber cable (1) is comprised of a graded-index type optical-fibre cable.


**Patentansprüche**

1. Optische Übertragungsvorrichtung, umfassend:

   a) ein optisches Faserkabel bzw. Kabel einer optischen Faser (1), beinhaltend einen Kern (11), eine Umhüllung bzw. Mantel (12) und eine Beschichtung (13), und aufweisend eine Lichtaustrittsfläche bzw. -seite (1a);
   b) Kabeladaptierungs- bzw. -anpassmittel bzw. -einrichtungen (2), welche einen Kernabschnitt (21), welcher eine kegelstumpfförmige Form mit einer großen Endfläche bzw. -seite (2a) und einer kleinen Endfläche bzw. -seite (2b) aufweist, einen Mantel- bzw. Umhüllungsabschnitt (22) und eine Beschichtung (23) beinhalten, welche einen geringeren Brechungsindex als denjenigen des Umhüllungsabschnitts (21) aufweist; und
   c) eine Hülse (3), welche ein Gehäuse (26) für ein optisches Faserkabel, welches einen lichten Durchmesser entsprechend dem Durchmesser des optischen Faserkabels (1) aufweist, und ein Gehäuse (27) für Kabeladaptierungsmittel beinhaltet, welches eine hohle bzw. leere bzw. lichte, kegelstumpfförmige Form entsprechend der Form der Kabeladaptierungsmittel (2) aufweist;

   worin wenigstens ein Teil des optischen Faserkabels (1) in dem optischen Faserkabel-Gehäuse (26) enthalten ist, worin die Kabeladaptierungsmittel (2) in dem Kabeladaptierungsmittel-Gehäuse (27) enthalten ist.

2. Optische Übertragungsvorrichtung nach Anspruch 1, worin die Lichtaustrittsfläche (1a) des optisches Faserkabels an die große Endfläche (2a) der Kabeladaptierungsmittel (2) mit einem transparenten Bindematerial (24) gebunden bzw. festgelegt ist.

**3.** Optische Übertragungsvorrichtung nach Anspruch 1 oder 2, worin die Kabeladaptierungsmittel (2) ein optisches Fasermaterial umfassen, welches dasselbe Niveau von numerischen Aperturen bzw. Öffnungen wie dasjenige des optischen Faserkabels (1) aufweist.

**4.** Optische Übertragungsvorrichtung nach einem der Ansprüche 1 bis 3, worin das optische Faserkabel (1) einen Kern (11) umfaßt, welcher dasselbe Niveau eines Brechungsindex wie dasjenige des Kernabschnitts (21) der Kabeladaptierungsmittel (2) aufweist und daran über ein transparentes Bindematerial (24) gebunden bzw. festgelegt ist, welches dasselbe Niveau eines Brechungsindex wie dasjenige des Kernabschnitts (21) aufweist.

**5.** Optische Übertragungsvorrichtung nach einem der Ansprüche 1 bis 4, worin das optische Faserkabel (1) aus einem optischen Kunststoff-Faserkabel besteht.

**6.** Optische Übertragungsvorrichtung nach einem der Ansprüche 1 bis 4, worin das optische Faserkabel (1) aus einem optischen Kern-Mantel-Faserkabeltyp besteht.

**7.** Optische Übertragungsvorrichtung nach einem der Ansprüche 1 bis 4, worin das optische Faserkabel (1) aus einem optischen Gradienten-Faserkabeltyp besteht.

**Revendications**

**1.** Dispositif de transmission optique comprenant :

(a) un câble de fibre optique (1) incluant une âme (11), un revêtement (12) et une gaine (13), et ayant une face de sortie de. lumière (1a) ;
(b) un adaptateur de câble (2) incluant une partie d'âme (21) de forme tronconique ayant une grande face d'extrémité (2a) et une petite face d'extrémité (2b), une partie de revêtement (22), et une gaine (23) ayant un indice de réfraction plus faible que celui de la partie de revêtement (21) ;
(c) un embout (3) incluant un logement de câble de fibre optique (26) ayant un diamètre de cavité qui correspond au diamètre du câble de fibre optique (1), et un logement d'adaptateur de câble (27) ayant une forme de cavité tronconique qui correspond à la forme de l'adaptateur de câble (2) ;

dans lequel au moins une partie du câble de fibre optique (1) est contenue dans le logement de câble de fibre optique (26), et dans lequel l'adaptateur de câble (2) est contenu dans le logement d'adaptateur de câble (27).

**2.** Dispositif de transmission optique selon la revendication 1, dans lequel la face de sortie de lumière (1a) du câble de fibre optique est liée à la grande face d'extrémité (2a) de l'adaptateur de câble (2) au moyen d'une matière de liaison transparente (24).

**3.** Dispositif de transmission optique selon la revendication 1 ou 2, dans lequel le dit adaptateur de câble (2) comprend une matière de fibre optique ayant le même niveau d'ouvertures numériques que celui du dit câble de fibre optique (1).

**4.** Dispositif de transmission optique selon une quelconque des revendications 1 à 3, dans lequel le dit câble de fibre optique (1) comprend une âme (11) ayant la même valeur d'indice de réfraction que celle de la dite partie d'âme (21) du dit adaptateur de câble (2), et liée à cette dernière au moyen d'une matière de liaison transparente (24) ayant la même valeur d'indice de réfraction que celle de la dite partie d'âme (21).

**5.** Dispositif de transmission optique selon une quelconque des revendications 1 à 4, dans lequel le dit câble de fibre optique (1) est constitué d'un câble de fibre optique en matière plastique.

**6.** Dispositif de transmission optique selon une quelconque des revendications 1 à 4, dans lequel le dit câble de fibre optique (1) est constitué d'un câble de fibre optique du type à indice échelonné.

**7.** Dispositif de transmission optique selon une quelconque des revendications 1 à 4, dans lequel le dit câble de fibre optique (1) est constitué d'un câble de fibre optique du type à indice progressif.

FIG.1

FIG.2

FIG.3

FIG.4

FIG.5

FIG.6

FIG.7

FIG.8

FIG.9

EP 0 862 073 B1